# EUROPÄISCHE PATENTSCHRIFT

(11) **EP 1 128 536 B1**
(45) Veröffentlichungstag und Bekanntmachung des Hinweises auf die Patenterteilung: **13.12.2006**
(21) Anmeldenummer: 00127869.6
(22) Anmeldetag: 20.12.2000
(51) Int. Cl.: H02M 3/28

(54) **Vorrichtung zur Ein- und Ausschaltung eines Steuergerätes**
Device for switching on and off a control circuit
Dispositif pour la mise en marche et l'arrêt d'un circuit de commande

(30) Priorität: 23.02.2000 DE 10008266
(43) Veröffentlichungstag der Anmeldung: 29.08.2001
(73) Patentinhaber: ROBERT BOSCH GMBH, 70442 Stuttgart (DE)
(72) Erfinder: Dittmer, Bernd, 71640 Lugwigsburg-Ossweil (DE); Gronbach, Roman, 70825 Korntal (DE); Rieger, Reinhard, 70372 Stuttgart (DE)

(56) Entgegenhaltungen:
- EP-A- 0 905 853
- DE-A- 19 645 944
- DE-A- 19 651 612
- US-A- 5 539 298
- US-A- 5 698 908
- PATENT ABSTRACTS OF JAPAN vol. 017, no. 587 (E-1453), 26. Oktober 1993 (1993-10-26) & JP 05 176464 A (S INTERNATL KK), 13. Juli 1993 (1993-07-13)
- PERIER L ET AL: "KOMMUNIKATION IM AUTOMOBIL" ELEKTRONIK, FRANZIS VERLAG GMBH. MUNCHEN, DE, Bd. 46, Nr. 4, 18. Februar 1997 (1997-02-18), Seiten 48-50,52,54-55, XP000655336 ISSN: 0013-5658

## Beschreibung

### Stand der Technik

Die Erfindung betrifft eine Vorrichtung zur Ein- und Ausschaltung eines in einem Zweispannungs-Bordnetz vorgesehenen Steuergerätes.

Aus der DE 196 45 944 ist bereits ein Steuergerät für ein Bordnetz mit wenigstens zwei von einem Generator aufladbaren Batterien bekannt, die zur Versorgung erster und zweiter Verbraucher dienen und bei vorgegebenen Bedingungen über das Steuergerät miteinander in Verbindung stehen. Das Steuergerät umfaßt ein Versorgungsnetzteil mit wenigstens einem Feldeffekttransistor und steht mit den Batterien über Mittel zur Spannungsbegrenzung in Verbindung. Zur Inbetriebnahme des Steuergerätes erfolgt eine Durchschaltung des Feldeffekttransistors unter Verwendung eines zugeführten Signals. Ein derartiges Steuergerät steht kontinuierlich mit den zur Versorgung dienenden Batterien in Verbindung, wobei die Stromaufnahme in deaktiviertem Zustand des Steuergerätes minimal ist und nach der Betätigung des Zündschalters des Kraftfahrzeuges eine sehr schnelle und einfache Aktivierung des Steuergerätes erfolgen kann.

### Vorteile der Erfindung

Die erfindungsgemäße Vorrichtung hat insbesondere den Vorteil, daß weder die Logikeinheit noch das Steuergerät im ausgeschalteten Zustand bzw. Standby-Betrieb Ruhestrom aufnehmen. Die beanspruchte Vorrichtung ermöglicht es im ausgeschalteten Zustand bzw. Standby-Betrieb, die komplette Spannungsversorgung für das Steuergerät abzuschalten und vom Bordnetz zu trennen.

Weiterhin ist die beanspruchte Logikeinheit gut integrierbar und für Steuergeräte universell verwendbar. Die genannte Logikeinheit ist sowohl zur Ansteuerung von Smart-Power-Schaltern als auch für diskrete MOSFET-Schalter als auch für Kleinschaltnetzteile bzw. Gleichspannungswandler geeignet.

Eine Spannungsdetektierung sorgt bei einem Ausfall und bei Unterspannung in einem Versorgungsspannungspfad für eine Zuschaltung eines zweiten Versorgungsspannungspfades, um den Energiebedarf des Verbrauchers zu decken. Ist der erste Versorungsspannungspfad Bestandteil eines 14 V-Bordnetzes und der zweite Versorungsspannungspfad Bestandteil eines 42 V-Bordnetzes, dann kann bei einem Absinken der 14 V-Versorgung unter einen vorgegebenen Schwellenwert die 42V-Versorgung hinzugeschaltet werden. Die Hinzuschaltung der 42 V-Versorgung erfolgt auch dann, wenn die 14 V-Bordnetzspannung beispielsweise aufgrund eines Batteriekabelbruches oder einem Defekt des 14 V-Schalters völlig fehlt.

Wird dem am ersten Eingang der Logikeinheit vorgesehenen Begrenzer ein Hochpaßfilter vorgeschaltet, dann erfolgt die Einschaltung des ersten Schalters lediglich durch ein Impulssignal. Hierdurch entfällt die Eingangsstromaufnahme in der Logikeinheit. Dabei ist zu beachten, daß die Zeitkonstante des Hochpasses größer ist als die Einschaltzeit der Schalter und der Spannungsversorgung, damit die Selbsthaltung über das Ausgangssignal des Spannungsstabilisators aktiviert ist.

Handelt es sich bei dem Steuergerät um einen Gleichspannungswandler, dann kann der das Ausschaltsignal liefernde Mikrocomputer integrierter Bestandteil dieses Gleichspannungswandlers sein.

### Zeichnung

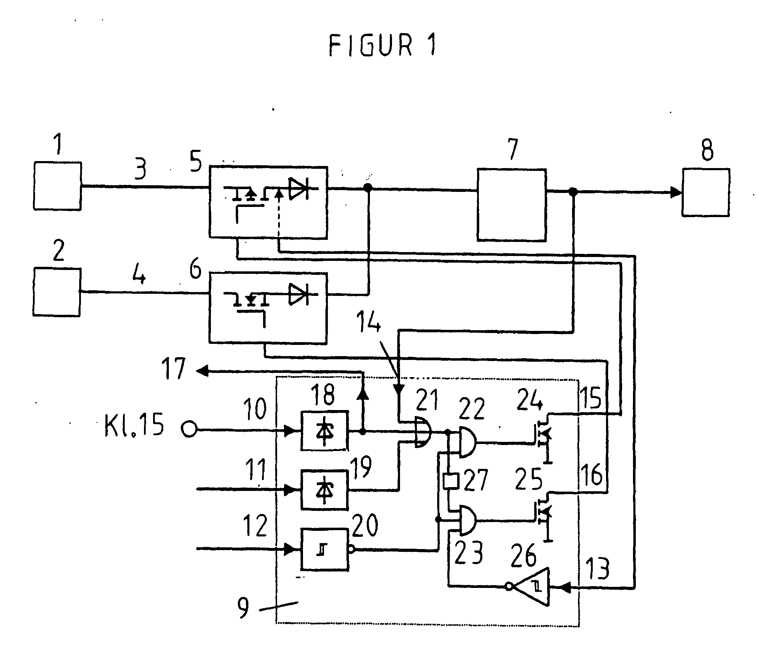

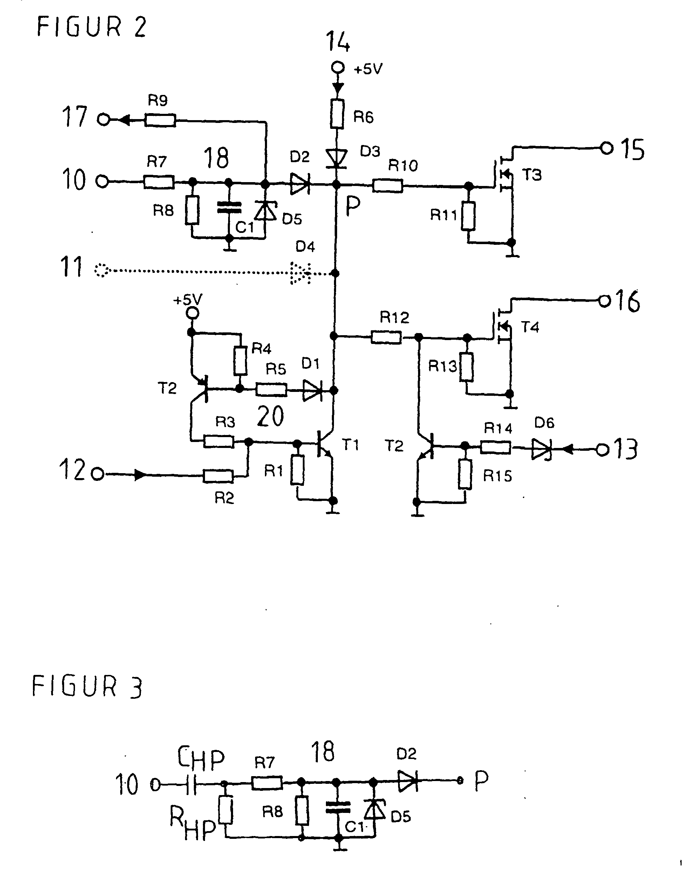

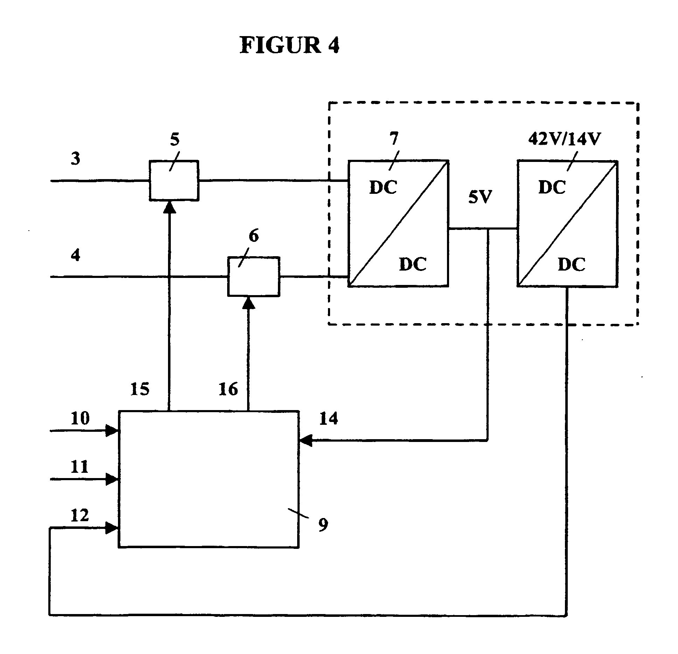

Nachfolgend wird die Erfindung anhand der Figuren beispielhaft näher erläutert. Die Figur 1 zeigt ein Blockschaltbild eines ersten Ausführungsbeispiels einer Vorrichtung zur Ein- und Ausschaltung eines in einem Zweispannungs-Bordnetz vorgesehenen Steuergerätes. Die Figur 2 zeigt ein Detailschaltbild eines Ausführungsbeispiels für die Logikeinheit 9 gemäß Figur 1. In Figur 3 ist eine Weiterbildung des Begrenzers 18 von Figur 2 offenbart. Die Figur 4 zeigt ein Prinzipschaltbild eines zweiten Ausführungsbeispiels einer Vorrichtung zur Ein- und Ausschaltung eines in einem Zweispannungs-Bordnetz vorgesehenen Steuergerätes.

### Beschreibung

Die Figur 1 zeigt ein Blockschaltbild eines ersten Ausführungsbeispiels einer Vorrichtung zur Ein- und Ausschaltung eines in einem Zweispannungs-Bordnetz vorgesehenen Steuergerätes.

Die gezeigte Vorrichtung weist ein 14 V-Bordnetz 1 auf, in welchem ein erster Versorgungsspannungspfad 3 vorgesehen ist, der eine erste Versorgungsspannung von 14 V trägt. In diesem ersten Versorgungsspannungspfad 3 ist ein erster steuerbarer Schalter 5 enthalten. Bei diesem Schalter 5 handelt es sich vorzugsweise um einen MOSFET-Transistor.

Weiterhin enthält die gezeigte Vorrichtung ein 42 V-Bordnetz 2, in welchem ein zweiter Versorungsspannungspfad 4 vorgesehen ist, der eine zweite Versorungsspannung von 42 V trägt. In diesem zweiten Versorgungsspannungspfad 4 ist ein zweiter steuerbarer Schalter 6 vorgesehen. Bei diesem Schalter 6 handelt es sich ebenfalls um einen MOSFET-Transistor.

Die beiden Schalter 5 und 6 weisen ausgangsseitig jeweils eine Entkopplungsdiode auf, die die beiden Versorgungsnetze bzw. Bordnetze voneinander entkoppelt. Die Ausgänge der beiden Schalter 5 und 6 sind miteinander und mit dem Eingang eines Spannungsstabilisators 7 verbunden. Dieser stellt ausgangsseitig eine stabilisierte Gleichspannung von 5 V zur Verfügung, die für nachgeschaltete Verbraucher 8 mit niedrigem Leistungsbedarf bereitgestellt wird.

Der Spannungsstabilisator 7 kann in Form eines Linearreglers realisiert sein. Besitzt dieser eine Spannungsfestigkeit für eine Eingangsspannung für 42 V nicht, dann weist der Schalter 6 einen Begrenzer auf, beispielsweise in Form einer Zenerdiode oder als Spannungsstabilisierung mit Emitterfolger (linearer Spannungsregler), die die Ausgangsspannung des Schalters 6 auf 14 V begrenzt.

Alternativ dazu kann der Spannungsstabilisator 7 auch als getakteter Regler, beispielsweise als Gleichspannungswandler, realisiert sein.

Die Ein- und Ausschaltung der Schalter 5 und 6 geschieht unter Verwendung von Steuersignalen, die an den Ausgängen 15 und 16 einer Logikeinheit 9 zur Verfügung gestellt werden.

Die Logikeinheit 9 weist einen ersten Eingang 10 auf, welchem ein von der Klemme 15 abgeleitetes erstes Einschaltsignal zuführbar ist. Dieses erste Einschaltsignal liegt stets dann vor, wenn der Zündschlüssel zum Anlassen des Fahrzeugs betätigt wird. Das dem Eingang 10 zugeführte erste Einschaltsignal wird über einen Begrenzer 18 einem Eingang eines ODER-Gliedes 21 zugeführt.

Weiterhin ist die Logikeinheit 9 mit einem Eingang 11 versehen, welchem ein zweites Einschaltsignal zuführbar ist. Bei diesem zweiten Einschaltsignal handelt es sich um ein Aufwecksignal, welches von einem CAN-Bus-Treiber erzeugt wird. Das dem Eingang 11 zugeführte zweite Einschaltsignal wird über einen Begrenzer 19 einem weiteren Eingang des ODER-Gliedes 21 zugeführt.

Einem Eingang 12 der Logikeinheit 9 ist ein von einem Mikrocontroller generiertes Ausschaltsignal zuführbar. Dieses gelangt über eine bistabile Kippstufe 20 an Eingänge eines ersten UND-Gliedes 23 und eines zweiten UND-Gliedes 22. Jedes dieser UND-Glieder weist einen weiteren Eingang auf, der mit dem Ausgang des ODER-Gliedes 21 verbunden ist, wobei der Ausgang des ODER-Gliedes 21 mit dem UND-Glied 23 über eine Verzögerungsstufe 27 gekoppelt ist.

Einem vierten Eingang 13 der Logikeinheit 9 wird ein aus dem Bereich des ersten Schalters 5 abgeleitetes Versorungsspannungsüberwachungssignal zugeführt, welches eine Information über den auf der Ausgangsseite des Schalters 5 vorliegenden Spannungspegel enthält. Dieses Versorgungsspannungsüberwachungssignal wird in einem Komparator 26 mit einer Referenzspannung verglichen. Sinkt das Versorgungsspannungsüberwachungssignal unter die Referenzspannung ab, dann liegt am Ausgang des Komparators ein Unterspannungskennsignal vor, welches einem weiteren Eingang des ersten UND-Gliedes 23 zugeführt wird. Tritt im Betrieb der Vorrichtung das Unterspannungskennsignal auf, dann führt dies über das UND-Glied 23 und ein Durchschalten des Feldeffekttransistors 25 zur Erzeugung eines Steuersignals am Ausgang 16 der Logikeinheit 9. Dieses Steuersignal wird dem zweiten Schalter 6 zugeführt, welcher dadurch eingeschaltet wird, so daß auch aus dem Bordnetz 2 abgeleitete Energie an den Spannungsstabilisator 7 weitergegeben wird.

Weiterhin weist die Logikeinheit 9 einen fünften Eingang 14 auf. Dieser ist mit dem Ausgang des Spannungsstabilisators 7 verbunden. Bei dem vom Ausgang des Spannungsstabilisators 7 zum fünften Eingang 14 geleiteten Signal handelt es sich um ein Selbsthaltungssignal. Dieses Selbsthaltungssignal verhindert ein Abschalten der Logik bzw. der Spannungsversorgung bei Signalunterbrechungen des Klemme 15-Signals am ersten Eingang 10 und ermöglicht auch die Realisierung einer Nachlauffunktion im Steuergerät, wenn das Klemme 15-Signal am ersten Eingang 10 nicht mehr anliegt.

Über einen dritten Ausgang 17 wird ein Klemme 15-Kennsignal an den Mikrocontroller geführt und von diesem ausgewertet. Beispielsweise wird es dort zur Ermittlung des Abschaltsignals verwendet, welches vom Mikrocontroller erzeugt und dem Eingang 12 der Logikeinheit 9 zugeführt wird.

Die Arbeitsweise der gezeigten Vorrichtung ist im wesentlichen wie folgt:

Bei einem Betätigen des Zündschalters des Kraftfahrzeugs wird das Klemme 15-Signal erzeugt und als erstes Einschaltsignal dem Eingang 10 der Logikeinheit 9 zugeleitet. Von dort aus wird es über den Begrenzer 18 und das ODER-Glied 21 dem UND-Glied 22 zugeführt. Dieses ist bei fehlendem Ausschaltsignal am Eingang 12 durchlässig, so daß das Einschaltsignal den Feldeffekttransistor 24 durchschaltet, wodurch am ersten Ausgang 15 der Logikeinheit 9 ein Steuersignal für den ersten Schalter 5 bereitgestellt wird. Dieses wird dem ersten Schalter 5 zugeführt und schaltet diesen ein bzw. durchlässig, so daß eine aus dem 14 V-Bordnetz 1 abgeleitete Versorgungsspannung an den Spannungsstabilisator 7 weitergeleitet wird.

Dieser stellt an seinem Ausgang eine 5 V-Spannung zur Verfügung, die zur Versorgung nachgeschalteter Verbraucher 8 dient.

Ein den zweiter Schalter 6 einschaltendes Steuersignal wird zu diesem Zeitpunkt wegen des Verzögerungsgliedes 27 noch nicht erzeugt.

Liegt nach dem Einschalten des ersten Schalters 5 an dessen Ausgangsseite die aus dem 14 V-Bordnetz 1 abgeleitete Versorgungsspannung an, dann wird diese Statusinformation der Logikeinheit 9 über deren Eingang 13 mitgeteilt. Als Reaktion darauf wird am Ausgang des Komparators 26 ein das UND-Glied 23 sperrendes Ausgangssignal erzeugt, so daß auch der an den Ausgang des UND-Gliedes 23 angschlossene Feldeffekttransistor 25 gesperrt bleibt. Dadurch entsteht auch am zweiten Ausgang 16 der Logikeinheit 9 kein den zweiten Schalter 6 einschaltendes Steuersignal, so daß aus dem 42 V-Bordnetz 2 keine Versorgungsspannung an den Spannungsstabilisator 7 gelangt.

Reicht im Betrieb die aus dem 14 V-Bordnetz 1 über den Schalter 5 abgeleitete Versorgung nicht aus, dann führt dies über die beschriebene Unterspannungserkennung mittels des Komparators 26 dazu, daß das UND-Glied 23 durchlässig wird. Dadurch wird auch der Feldeffekttransistor 25 durchgeschaltet, so daß am zweiten Ausgang der Logikeinheit 9 ein den zweiten Schalter 6 einschaltendes Steuersignal erzeugt wird. Über diesen dann durchlässigen zweiten Schalter 6 wird auch die aus den 42 V-Bordnetz 2 abgeleitete Versorgungsspannung freigegeben, d. h. das zweite Bordnetz 2 mit dem Spannungsstabilisator 7 verbunden.

Eine Ausschaltung der Schalter 5 und 6 erfolgt unter Verwendung eines dem Eingang 12 der Logikeinheit 9 zugeführten Ausschaltsignals. Dieses wird von einem Mikrocontroller erzeugt und wird in der Logikeinheit 9 über eine bistabile Kippstufe 20 an Eingänge der UND-Glieder 22 und 23 geführt. Dadurch werden diese gesperrt, so daß über die Ausgänge 15 und 16 der Logikeinheit 9 die Schalter 5 und 6 ausgeschaltet bzw. gesperrt werden.

Eine alternative Möglichkeit für das Einschalten des ersten Schalters 5 ist über den Eingang 11 der Logikeinheit 9 gegeben. Diesem Eingang 11 kann ein von einem CAN-Bus-Treiber generiertes Aufwecksignal zugeführt werden. Dieses gelangt über einen Begrenzer 19 an das ODER-Glied 21 und danach an das UND-Glied 22. Dieses ist bei fehlendem Ausschaltsignal ebenfalls durchlässig, so daß das dem zweiten Eingang 11 zugeleitete zweite Einschaltsignal auf die gleiche Weise wie das erste Einschaltsignal zur Einschaltung des Schalters 5 verwendet werden kann.

Die Figur 2 zeigt ein Detailschaltbild eines Ausführungsbeispiels für die Logikeinheit 9 von Figur 1.

Das dem ersten Eingang 10 der Logikeinheit 9 zugeführte erste Einschaltsignal wird einem Begrenzer 18 zugeführt, der einen Widerstand R7, einen Widerstand R8, einen Kondensator C1 und eine Diode D5 aufweist. Vom Ausgang des Begrenzers wird das begrenzte Einschaltsignal über einen Widerstand R9 am Ausgang 17 zur Verfügung gestellt. Weiterhin wird es über eine Diode D2 einem Schaltungspunkt P zugeführt.

Diesem wird weiterhin das am Eingang 11 bereitgestellte zweite Einschaltsignal über eine Diode D4 oder gegebenenfalls auch über einen Begrenzer und eine Diode zugeführt.

Ferner liegt am Schaltungspunkt P auch das am Eingang 12 vorliegende Ausschaltsignal an, welches über eine bistabile Kippstufe 20 geleitet wird, welche Widerstände R1, R2, R3, R4 und R5, Transistoren T1 und T2 sowie eine Diode D1 aufweist.

Der Eingang 14 der Logikeinheit, welchem das Selbsthaltungssignal zugeführt wird, ist mit dem Schaltungspunkt P über einen Widerstand R6 und eine Diode D3 verbunden.

Weiterhin führt vom Schaltungspunkt P ein Signalweg über einen Widerstand R10 an eine Ausgangsstufe, die einen Feldeffekttransistor T3 und einen Widerstand R11 aufweist. Der Ausgang des Feldeffekttransistors T3 bildet den ersten Ausgang 15 der Logikeinheit.

Ein weiterer Signalweg erstreckt sich vom Schaltungspunkt P über den Widerstand R12 an eine weitere Ausgangsstufe, die einen Feldeffekttransistor T4 und einen Widerstand R13 aufweist. Der Ausgang des Feldeffekttransistors T4 bildet den zweiten Ausgang 16 der Logikeinheit.

Der Eingang 13 für das Versorgungsspannungsüberwachungssignal ist über eine Diode D6, einen Widerstand R14 und einen Transistor T2 mit dem Gate-Anschluß des Feldeffekttransistors T4 verbunden. Weiterhin ist zwischen der Basis und dem Emitter des Transistors T2 ein Widerstand R15 vorgesehen.

In der Figur 3 ist eine Weiterbildung des am Eingang 10 der Logikeinheit vorgesehenen Begrenzers 18 gezeigt. Diesem ist ein Hochpaßfilter vorgeschaltet, welches einen Kondensator C_{HP} und einen Widerstand R_{HP} aufweist. Bei dieser Weiterbildung erfolgt die Einschaltung des ersten Schalters lediglich durch ein Impulssignal. Hierdurch entfällt der Ruhestrom durch den Klemme 15-Schalter bzw. die Eingangsstromaufnahme in der Logikeinheit. Dabei muß darauf geachtet werden, daß die Zeitkonstante des Hochpasses größer oder gleich der Einschaltzeit des Schalters und der Spannungsversorgung ist, damit die Selbsthaltung über das 5 V-Ausgangssignal des Spannungsstabilisators arbeiten kann. In diesem Fall ist eine Rückführung des Klemme 15-Signals über den Ausgang 17 an den Mikrocontroller nicht möglich, so daß dem Mikrocontroller die Information über den Status des Klemme 15-Signals anderweitig zur Verfügung gestellt werden muß, beispielsweise über den CAN-Bus.

Die Figur 4 zeigt ein Prinzipschaltbild eines zweiten Ausführungsbeispiels einer Vorrichtung zur Ein- und Ausschaltung eines in einem Zweispannungs-Bordnetz vorgesehenen Steuergerätes.

Dieses unterscheidet sich von dem oben gezeigten Ausführungsbeispiel insbesondere dadurch, daß der hinter den Schaltern 5 und 6 vorgesehene Spannungsstabilisator 7 als Gleichspannungswandler realisiert ist. In vorteilhafter Weise ist in dem Steuergerät, beispielsweise einem Gleichspannungswandler, der Mikrocontroller integriert, der das dem Eingang 12 der Logikeinheit 9 zugeführte Ausschaltsignal generiert.

Nach alledem wird mittels der beschriebenen Vorrichtung erreicht, daß im ausgeschalteten Zustand bzw. Standby-Betrieb weder die Logikeinheit noch das Steuergerät Strom aus den Bordnetzen aufnimmt. Insbesondere bildet die Logikeinheit 9 zusammen mit den Schaltern 5 und 6 eine ruhestromfreie Schaltvorrichtung. Das hinter den Schaltern angeordnete Steuergerät, das beispielsweise in Form eines Gleichspannungswandlers realisiert sein kann, ist völlig vom Netz getrennt. Das Einschalten des Schalters (der Schalter) erfolgt durch die Zuführung des Klemme 15-Signals oder eines Aufwecksignals, wobei die zugehörigen Leitungen lediglich als Signalleitungen dienen. Eine Stromversorgung der Logikeinheit im ausgeschalteten Zustand bzw. Bereitschaftsbetrieb ist nicht notwendig.

## Patentansprüche

1. Vorrichtung, die ein in einem Zweispannungsbordnetz angeordnetes Steuergerät ein- und ausschaltet, mit einem ersten elektronischen Schalter (5) in einem ersten Versorgungsspannungspfad (3) und einem zweiten elektronischen Schalter (6) in einem zweiten Versorgungsspannungspfad (4), und einer Logikeinheit (9), welche einen ersten Eingang (10) für ein erstes Einschaltsignal, einen zweiten Eingang (12) für ein Ausschaltsignal, einen ersten Ausgang (15) für ein Steuersignal für den ersten elektronischen Schalter (5), einen zweiten Ausgang (16) für ein Steuersignal für den zweiten elektronischen Schalter (6), einen dritten Eingang (11) für ein zweites Einschaltsignal und eine zwischen den Eingängen und den Ausgängen angeordnete Signalverknüpfungseinheit (21, 22, 23, 27) aufweist, **dadurch gekennzeichnet, dass** die Signalverknüpfungseinheit ein ODER-Glied (21) umfasst, welchem eingangsseitig die beiden Einschaltsignale zugeführt werden, wobei Mittel (22, 23, 24, 25, 27) vorhanden sind, die an das ODER-Glied (21) angeschlossen sind und den zweiten elektronischen Schalter (6) verzögert nur dann zusätzlich zum ersten elektronischen Schalter (5) einschalten, wenn auf der Ausgangsseite des ersten elektronischen Schalters (5) nach dessen Einschalten eine Unterspannung erkannt wird.

2. Vorrichtung nach Anspruch 1, **dadurch gekennzeichnet, dass** zwischen dem ersten Eingang (10) und dem ODER-Glied (21) und zwischen dem dritten Eingang (11) und dem ODER-Glied (21) jeweils ein Begrenzer (18, 19) angeordnet ist.

3. Vorrichtung nach Anspruch 2, **dadurch gekennzeichnet, dass** die beiden Begrenzer (18, 19) Zenerdioden sind.

4. Vorrichtung nach Anspruch 3, **dadurch gekennzeichnet, daß** zwischen dem ersten Eingang (10) und dem Begrenzer (18) ein Hochpaß (C_{HP}, R_{HP}) geschaltet ist.

5. Vorrichtung nach einem der vorhergehenden Ansprüche, **dadurch gekennzeichnet, daß** das dem ersten Eingang (10) zugeführte erste Einschaltsignal ein von einer Klemme 15 abgeleitetes Signal ist.

6. Vorrichtung nach einem der Ansprüche 2 bis 5, **dadurch gekennzeichnet, daß** das dem dritten Eingang (11) zugeführte zweite Einschaltsignal ein von einem CAN-Bus-Teiberbaustein abgeleitetes Aufwecksignal ist.

7. Vorrichtung nach einem der vorhergehenden Ansprüche, **dadurch gekennzeichnet, daß** das dem zweiten Eingang (12) zugeführte Ausschaltsignal ein von einem Mikrocontroller geliefertes Signal ist.

8. Vorrichtung nach Anspruch 7, **dadurch gekennzeichnet, daß** die Logikeinheit (9) einen dritten Ausgang (17) für ein Statusmeldesignal aufweist, welches Informationen über den Status des ersten Einschaltsignals enthält.

9. Vorrichtung nach einem der vorhergehenden Ansprüche, **dadurch gekennzeichnet, daß** die Logikeinheit (9) einen vierten Eingang (13) für ein Versorgungsspannungsüberwachungssignal aufweist.

10. Vorrichtung nach Anspruch 9, **dadurch gekennzeichnet, daß** der vierte Eingang (13) für das Versorgungsspannungsüberwachungssignal mit einem Komparator (26) verbunden ist, in welchem das Versorgungsspannungsüberwachungssignal mit einem Referenzsignal verglichen wird und welcher bei einem Abfall des Versorgungsspannungsüberwachungssignals unter das Referenzsignal ein Unterspannungskennsignal erzeugt.

11. Vorrichtung nach Anspruch 10, **dadurch gekennzeichnet, daß** die Signalverknüpfungseinheit ein erstes UND-Glied (23) aufweist, welchem eingangsseitig das Unterspannungskennsignal und ein Einschaltsignal zugeführt sind.

12. Vorrichtung nach Anspruch 11, **dadurch gekennzeichnet, daß** das Einschaltsignal dem ersten UND-Glied (23) über ein Verzögerungsglied (27) zugeführt ist.

13. Vorrichtung nach einem der vorhergehenden Ansprüche, **dadurch gekennzeichnet, daß** die Logikeinheit (9) einen fünften Eingang (14) für ein Selbsthaltungssignal aufweist.

14. Vorrichtung nach einem der Ansprüche 2 bis 13, **dadurch gekennzeichnet, daß** dem ODER-Glied (21) eingangsseitig weiterhin das Selbsthaltungssignal zugeführt ist.

15. Vorrichtung nach einem der vorhergehenden Ansprüche, **dadurch gekennzeichnet, daß** das Ausschaltsignal in der Logikeinheit (9) über eine bistabile Kippstufe (20) geführt ist.

16. Vorrichtung nach Anspruch 15, **dadurch gekennzeichnet, daß** der Ausgang der bistabilen Kippstufe (20) einem Eingang eines zweiten UND-Gliedes (22) zugeführt ist, daß der Ausgang des ODER-Gliedes (21) mit einem weiteren Eingang des zweiten UND-Gliedes (22) verbunden ist, und daß der Ausgang des zweiten UND-Gliedes (22) über einen Feldeffekttransistor (24) mit dem ersten Ausgang (15) der Logikeinheit (9) verbunden ist.

17. Vorrichtung nach einem der Ansprüche 15 oder 16, **dadurch gekennzeichnet, daß** der Ausgang der bistabilen Kippstufe (20) mit einem weiteren Eingang des ersten UND-Gliedes (23) verbunden ist und daß der Ausgang des ersten UND-Gliedes (23) über einen Feldeffekttransistor (25) mit dem zweiten Ausgang (16) der Logikeinheit (9) verbunden ist.

18. Vorrichtung nach einem der vorhergehenden Ansprüche, **dadurch gekennzeichnet, daß** der Ausgang des ersten elektronischen Schalters (5) mit dem Ausgang des zweiten elektronischen Schalters (6) verbunden ist und den beiden Schaltern (5, 6) ein Spannungsstabilisator (7) nachgeschaltet ist.

19. Vorrichtung nach Anspruch 18, **dadurch gekennzeichnet, daß** das Selbsthaltungssignal vom Ausgang des Spannungsstabilisators (7) abgeleitet ist.

20. Vorrichtung nach 18 oder 19, **dadurch gekennzeichnet, daß** der Spannungsstabilisator (7) einen Linearregler aufweist.

21. Vorrichtung nach Anspruch 20, **dadurch gekennzeichnet, daß** der zweite elektronische Schalter (6) einen Spannungsbegrenzer aufweist.

22. Vorrichtung nach Anspruch 18 oder 19 **dadurch gekennzeichnet, daß** der Spannungsstabilisator (7) einen getakteten Regler aufweist.

23. Vorrichtung nach Anspruch 22, **dadurch gekennzeichnet, daß** der Spannungsstabilisator (7) ein Gleichspannungswandler ist.

24. Vorrichtung nach einem der vorhergehenden Ansprüche, **dadurch gekennzeichnet, daß** der erste Versorgungsspannungspfad (3) eine Bordnetzspannung von 14 V und der zweite Versorgungsspannungspfad (4) eine Bordnetzspannung von 42 V führt.

25. Vorrichtung nach Anspruch 24, **dadurch gekennzeichnet, daß** der Spannungsstabilisator (7) an seinem Ausgang eine Gleichspannung von 5 V zur Verfügung stellt.

26. Vorrichtung nach einem der Ansprüche 23 bis 25, **dadurch gekennzeichnet, daß** der Mikrocontroller integrierter Bestandteil des Gleichspannungswandlers ist.

27. Vorrichtung nach einem der vorhergehenden Ansprüche, **dadurch gekennzeichnet, daß** am Ausgang des ersten und des zweiten elektronischen Schalters (5, 6) jeweils eine Entkopplungsdiode vorgesehen ist.

28. Vorrichtung nach einem der vorhergehenden Ansprüche, **dadurch gekennzeichnet, daß** die Logikeinheit (9) zusammen mit dem ersten und dem zweiten elektronischen Schalter (5, 6) im ausgeschalteten Zustand der Schalter bzw. im Standby-Betrieb eine ruhestromfreie Schalteinheit bildet.

## Claims

1. Device which switches on and off a control device arranged in dual-voltage on-board power system of a vehicle, having a first electronic switch (5) in a first supply voltage path (3) and a second electronic switch (6) in a second supply voltage path (4), and a logic unit (9) which has a first input (10) for a first switch-on signal, a second input (12) for a switch-off signal, a first output (15) for a control signal for the first electronic switch (5), a second output (16) for a control signal for the second electronic switch (6), a third input (11) for a second switch-on signal and a signal logic combination unit (21, 22, 23, 27) which is arranged between the inputs and the outputs, **characterized in that** the signal logic combination unit comprises an OR element (21) to which the two switch-on signals are fed on the input side, means (22, 23, 24, 25, 27) being provided which are connected to the OR element (21) and delay the second electronic switch (6) in addition to the first electronic switch (5) only if an undervoltage is detected on the output side of the first electronic switch (5) after it is switched on.

2. Device according to Claim 1, **characterized in that** a limiter (18, 19) is arranged respectively between the first input (10) and the OR element (21) and between the third input (11) and the OR element (21).

3. Device according to Claim 2, **characterized in that** the two limiters (18, 19) are zener diodes.

4. Device according to Claim 3, **characterized in that** a high pass filter (C_{HP}, R_{HP}) is connected between the first input (10) and the limiter (18).

5. Device according to one of the preceding claims, **characterized in that** the first switch-on signal which is fed to the first input (10) is a signal which is derived from a terminal 15.

6. Device according to one of Claims 2 to 5, **characterized in that** the second switch-on signal which is fed to the third input (11) is a wake-up signal which is derived from a CAN bus driver module.

7. Device according to one of the preceding claims, **characterized in that** the switch-off signal which is fed to the second input (12) is a signal which is supplied by a microcontroller.

8. Device according to Claim 7, **characterized in that** the logic unit (9) has a third output (17) for a status indicating signal which contains information about the status of the first switch-on signal.

9. Device according to one of the preceding claims, **characterized in that** the logic unit (9) has a fourth input (13) for a supply voltage monitoring signal.

10. Device according to Claim 9, **characterized in that** the fourth input (13) for the supply voltage monitoring signal is connected to a comparator (26) in which the supply voltage monitoring signal is compared with a reference signal and which generates an undervoltage detection signal in the event of the supply voltage monitoring signal dropping below the reference signal.

11. Device according to Claim 10, **characterized in that** the signal logic combination unit has a first AND element (23) to which the undervoltage detection signal and a switch-on signal are fed at the input end.

12. Device according to Claim 11, **characterized in that** the switch-on signal is fed to the first AND element (23) via a delay element (27).

13. Device according to one of the preceding claims, **characterized in that** the logic unit (9) has a fifth input (14) for a self-locking signal.

14. Device according to one of Claims 2 to 13, **characterized in that** the self-locking signal continues to be fed to the OR element (21) at the input end.

15. Device according to one of the preceding claims, **characterized in that** the switch-off signal is conducted in the logic unit (9) via a bistable flipflop (20).

16. Device according to Claim 15, **characterized in that** the output of the bistable flipflop (20) is fed to an input of a second AND element (22), **in that** the output of the OR element (21) is connected to a further input of the second AND element (22), and **in that** the output of the second AND element (22) is connected to the first output (15) of the logic unit (9) via a field-effect transistor (24).

17. Device according to one of Claims 15 or 16, **characterized in that** the output of the bistable flipflop (20) is connected to a further input of the first AND element (23), and **in that** the output of the first AND element (23) is connected to the second output (16) of the logic unit (9) via a field-effect transistor (25).

18. Device according to one of the preceding claims, **characterized in that** the output of the first electronic switch (5) is connected to the output of the second electronic switch (6) and a voltage stabilizer (7) is connected downstream of the two switches (5, 6).

19. Device according to Claim 18, **characterized in that** the self-locking signal is derived from the output of the voltage stabilizer (7).

20. Device according to Claim 18 or 19, **characterized in that** the voltage stabilizer (7) is a linear regulator.

21. Device according to Claim 20, **characterized in that** the second electronic switch (6) has a voltage limiter.

22. Device according to Claim 18 or 19, **characterized in that** the voltage stabilizer (7) has a clocked regulator.

23. Device according to Claim 22, **characterized in that** the voltage stabilizer (7) is a DC voltage transformer.

24. Device according to one of the preceding claims, **characterized in that** the first supply voltage path (3) conducts an on-board power system voltage of 14 V and the second voltage supply path (4) conducts an on-board power system voltage of 42 V.

25. Device according to Claim 24, **characterized in that** the voltage stabilizer (7) makes available a DC voltage of 5 V at its output.

26. Device according to one of Claims 23 to 25, **characterized in that** the microcontroller is an integrated component of the DC voltage transformer.

27. Device according to one of the preceding claims, **characterized in that** a decoupling diode is provided at the output of the first electronic switch (5) and one is provided at the output of the second electronic switch (6).

28. Device according to one of the preceding claims, **characterized in that** the logic unit (9) forms, together with the first and second electronic switches (5, 6), a quiescent-current-free switching unit in the switched-off state of the switches or in the standby operating mode.

## Revendications

1. Dispositif pour la mise en marche et l'arrêt d'un appareil de commande installé dans un réseau embarqué bitension, comportant un premier commutateur électronique (5) dans un premier chemin d'alimentation en tension (3) et un second commutateur électronique (6) dans un second chemin d'alimentation en tension (4) ainsi qu'une unité logique (9) ayant une première entrée (10) pour un premier signal de branchement, une seconde entrée (12) pour un signal d'arrêt, une première sortie (15) pour un signal de commande pour le premier commutateur électronique (5), une seconde sortie (16) pour un signal de commande pour le second commutateur électronique (6), une troisième entrée (11) pour un second signal de branchement et une unité de combinaison de signaux (21, 22, 23, 27) installée entre les entrées et les sorties,
**caractérisé en ce que**
l'unité de combinaison de signaux comporte une porte OU (21) dont l'entrée reçoit les deux signaux de branchement, et
des moyens (22, 23, 24, 25, 27) sont reliés à la porte OU (21) et branchent le second commutateur électronique (6) de manière retardée seulement de façon complémentaire au premier commutateur électronique (5) si sur le côté de sortie du premier commutateur électronique (5) on décèle une sous-tension après son branchement.

2. Dispositif selon la revendication 1,
**caractérisé par**
un limiteur (18, 19) installé entre la première entrée (10) et la porte OU (21) et entre la troisième entrée (11) et la porte OU (21).

3. Dispositif selon la revendication 2,
**caractérisé en ce que**
les deux limiteurs (18, 19) sont des diodes Zener.

4. Dispositif selon la revendication 3,
**caractérisé par**
un filtre passe-haut (C_{HP}, R_{HP}) installé entre la première entrée (10) et le limiteur (18).

5. Dispositif selon l'une des revendications précédentes,
**caractérisé en ce que**
le premier signal de branchement appliqué à la première entrée (10) est un signal pris sur une borne (15).

6. Dispositif selon l'une quelconque des revendications 2 à 5,
**caractérisé en ce que**
le second signal de branchement appliqué à la seconde entrée (11) est un signal de réveil déduit d'un composant pilote de bus CAN.

7. Dispositif selon l'une quelconque des revendications précédentes,
**caractérisé en ce que**
le signal de coupure appliqué à la seconde entrée (12) est un signal fourni par un micro-contrôleur.

8. Dispositif selon la revendication 7,
**caractérisé en ce que**
l'unité logique (9) comporte une troisième sortie (17) pour un signal d'information d'état qui contient des informations relatives à l'état du premier signal de branchement.

9. Dispositif selon l'une des revendications précédentes,
**caractérisé en ce que**
l'unité logique (9) comporte une quatrième entrée (13) pour un signal de surveillance de tension d'alimentation.

10. Dispositif selon la revendication 9,
**caractérisé en ce que**
la quatrième entrée (13) est reliée à un comparateur (26) pour le signal de surveillance de tension d'alimentation, comparateur qui compare le signal de surveillance de tension d'alimentation à un signal de référence et qui si le signal de surveillance de tension d'alimentation tombe en dessous du signal de référence, génère un signal de détection de sous-tension.

11. Dispositif selon la revendication 10,
**caractérisé en ce que**
l'unité de combinaison de signal comporte une première porte ET (23) dont l'entrée reçoit le signal de détection de sous-tension et un signal de branchement.

12. Dispositif selon la revendication 11,
**caractérisé en ce que**
le signal de branchement est appliqué à la première porte ET (23) par un élément de temporisation (27).

13. Dispositif selon l'une quelconque des revendications précédentes,
**caractérisé en ce que**
l'unité logique (9) a une cinquième entrée (14) pour un signal de maintien automatique.

14. Dispositif selon l'une des revendications 2 à 13,
**caractérisé en ce qu'**
en outre la porte OU (21) reçoit en entrée le signal de maintien automatique.

15. Dispositif selon l'une quelconque des revendications précédentes,
**caractérisé en ce que**
le signal de coupure est transmis à l'unité logique (9) par une bascule bi-stable (20).

16. Dispositif selon la revendication 15,
**caractérisé en ce que**
la sortie de la bascule bi-stable (20) reçoit une entrée d'une seconde porte ET (22), la sortie de la porte OU (21) étant reliée à une autre entrée de la seconde porte ET (22) et la sortie de la seconde porte (ET) 22 est reliée par un transistor à effet de champ (24) à la première sortie (15) de l'unité logique (9).

17. Dispositif selon l'une des revendications 15 ou 16,
**caractérisé en ce que**
la sortie de la bascule bi-stable (20) est reliée à une autre entrée de la première porte ET (23) et la sortie de la première porte ET (23) est reliée par un transistor à effet de champ (25) à la seconde sortie (16) de l'unité logique (9).

18. Dispositif selon l'une des revendications précédentes,
**caractérisé en ce que**
la sortie du premier commutateur électronique (5) est reliée à la sortie du second commutateur électronique (6) et les deux commutateurs (5, 6) sont suivis par un stabilisateur de tension (7).

19. Dispositif selon la revendication 18,
**caractérisé en ce que**
le signal de maintien automatique est déduit de la sortie du stabilisateur de tension (7).

20. Dispositif selon les revendications 18 ou 19,
**caractérisé en ce que**
le stabilisateur de tension (7) comporte un régulateur linéaire.

21. Dispositif selon la revendication 20,
**caractérisé en ce que**
le second commutateur électronique (6) comporte un limiteur de tension.

22. Dispositif selon les revendications 18 ou 19,
**caractérisé en ce que**
le stabilisateur de tension (7) comporte un régulateur cadencé.

23. Dispositif selon la revendication 22,
**caractérisé en ce que**
le stabilisateur de tension (7) est un convertisseur de tension continue.

24. Dispositif selon l'une quelconque des revendications précédentes,
**caractérisé en ce que**
le premier chemin de tension d'alimentation (3) présente une tension de réseau embarqué de 14 V et le second chemin de tension d'alimentation (4) présente une tension de réseau embarqué de 42 V.

25. Dispositif selon la revendications 24,
**caractérisé en ce que**
le stabilisateur de tension (7) fournit à sa sortie une tension continue de 5 V.

26. Dispositif selon l'une quelconque des revendications 23 à 25,
**caractérisé en ce que**
le micro-contrôleur fait partie intégrante du convertisseur de tension continue.

27. Dispositif selon l'une quelconque des revendications précédentes,
**caractérisé en ce que**
la sortie du premier et celle du second commutateur électronique (5, 6) comportent chaque fois une diode de découplage.

28. Dispositif selon l'une quelconque des revendications précédentes,
**caractérisé en ce que**
l'unité logique (20) forme avec le premier et le second commutateur électroniques (5, 6), une unité de commutation sans courant de repos lorsque le commutateur est coupé ou en mode d'attente.
